# EUROPEAN PATENT APPLICATION

(11) **EP 3 998 311 A1**
(43) Date of publication of application: **18.05.2022**
(21) Application number: 19896390.2
(22) Date of filing: 13.08.2019
(51) Int. Cl.: C08L 67/02, C08L 97/02

(54) **BIODEGRADABLE PRODUCT AND PREPARATION METHOD THEREFOR**

(30) Priority: 12.07.2019 CN 201910631478
(71) Applicant: Shanghai Changfa New Materials Co., Ltd., Shanghai 200030 (CN)
(72) Inventor: SHI, Xiaodan, Shanghai 200030 (CN); HAO, Lufeng, Shanghai 200030 (CN); ZHENG, Lu, Shanghai 200030 (CN)
(74) Representative: Cabinet Chaillot
(86) International application number: PCT/CN2019/100438
(87) International publication number: WO 2020/119158

(57) **Abstract**

The invention relates to a biodegradable product, comprising, by weight, the following compositions in parts: 40-90 parts of biodegradable resin, 5-50 parts of papermaking waste, 0-40 parts of starch, 0-5 parts of inorganic minerals, and 2-15 parts of adjuvant. The invention further relates to a method for preparing a biodegradable product. The invention has the following advantages: such a method compounds the papermaking waste, starch, inorganic minerals and biodegradable resin. In this way, cost for producing the biodegradable product is greatly reduced; and the papermaking waste is recycled effectively, eliminating the impact on the environment.

## Description

### BACKGROUND OF THE INVENTION

### 1. Field of the Invention

The invention relates to the technical field of degradable composites, and more particularly, to a biodegradable product and a method for preparing the same.

### 2. Description of the Related Art

Recently, environmental-friendly degradable materials, having the advantages of low cost and high performance, provide an alternative to traditional petroleum-based plastics, which has become a research hotspot due to deteriorating environment. However, biodegradable resin's relatively high cost has limited its use in conventional commercial applications.

In the pulping and paper-making industry, 140 million tons of cellulose is separated from plants each year, and a large amount of by-products are generated from the pulping and papermaking process, such as papermaking wastes. However, it should be noted that more than 95% of the papermaking wastes are directly discharged into rivers or treated by incineration after being subjected to concentration. Therefore, the papermaking wastes, on most occasions, are not effectively used.

A fully biodegradable garbage bag, comprising 35-55 parts of PBAT, 45-65 parts of PLA, 0.3-0.8 parts of antioxidant and 0.5-2 parts of dibenzoyl peroxide by weight, is disclosed in Chinese Patent Application No. CN106317941A. Its high cost makes it impossible to be widely used in the market.

Thus, there is a need for a low-cost composite material which is degradable, and in which the papermaking wastes are allowed to be incorporated.

### SUMMARY OF THE INVENTION

Aiming at the above-mentioned problems in the prior art, the present invention aims to provide a biodegradable product and a method for preparing the same.

In order to achieve the above-mentioned objective, the present invention adopts the following technical solution:
a biodegradable product, comprising, by weight, the following compositions in parts:
40-90 parts of biodegradable resin,
5-50 parts of papermaking waste,
0-40 parts of starch,
0-5 parts of inorganic minerals, and
2-15 parts of adjuvant.

Preferably, the biodegradable product comprises, by weight, the following compositions in parts:
50-80 parts of biodegradable resin,
10-40 parts of papermaking waste,
5-25 parts of starch,
1-4 parts of inorganic minerals, and
3-12 parts of adjuvant.

Preferably, the biodegradable product comprises, by weight, the following compositions in parts:
55-75 parts of biodegradable resin,
15-35 parts of papermaking waste,
10-20 parts of starch,
2-3 parts of inorganic minerals, and
4-10 parts of adjuvant.

Preferably, the biodegradable resin is selected from the group consisting of: poly (butylene succinate) , polybutylene terephthalate/butylene adipate, polylactic acid (PLA), polyhydroxyalkanoate (PHA), polymethylethylene carbonate (PPC), and a mixture thereof.

Preferably, the papermaking waste is selected from the group consisting of: slime, pulp, bark, pulping wastewater extract, silicon-containing white mud, and a mixture thereof.

Preferably, the papermaking waste has a particle size of 50 to 5000 mesh.

Preferably, the papermaking waste has a particle size of 200 to 3000 mesh.

Preferably, the papermaking waste has a particle size of 500 to 2000 mesh.

Preferably, the starch is selected from the group consisting of: cassava starch, corn starch, potato starch, cationic modified starch, anionic modified starch, and a mixture thereof.

Preferably, the inorganic minerals are selected from the group consisting of: calcium carbonate, kaolin, talc, diatomite, and a mixture thereof.

Preferably, the adjuvant comprises, by weight, the following compositions in parts:
0.5-2 parts of a crosslinker,
1-10 parts of a plasticizer, and
0.5-5 parts of a lubricant.

Preferably, the adjuvant comprises, by weight, the following compositions in parts:
0.7-1.5 parts of a crosslinker,
2-9 parts of a plasticizer, and
1-4 parts of a lubricant.

Preferably, the adjuvant comprises, by weight, the following compositions in parts:
0.8-1.2 parts of a crosslinker,
3-8 parts of a plasticizer, and
1.5-3.5 parts of a lubricant.

Preferably, the crosslinker is selected from the group consisting of: dicumyl peroxide (DCP), benzoyl peroxide, 2,5-dimethyl-2,5 di-tert-butyl peroxyhexane, and a mixture thereof;
the plasticizer is selected from the group consisting of: butyl citrate, acetyl-tri-n-butyl citrate(ATBC), glycerin, epoxidized soybean oil, and a mixture thereof; and
the lubricant is calcium stearate.

The present invention further provides a method for preparing a biodegradable product, comprising the steps of:
Step 1, adding biodegradable resin, papermaking waste, starch, inorganic minerals, and adjuvant into a high-speed mixer proportionally and mixing the same therein, so as to obtain an initial mixed material;
Step 2, adding the initial mixed material into a twin-screw extruder for extrusion and granulation, so as to obtain a biodegradable product master batch; and
Step 3, forming the biodegradable product master batch by blow molding, so as to obtain the biodegradable product.

Preferably, in Step 1, the biodegradable resin, the papermaking waste, the starch, the inorganic minerals, and the adjuvant are added to the high-speed mixer proportionally and are mixed at 10rpm -5000rpm for 5min-1000min, and are heated up to a temperature between 10°C and 150°C.

Preferably, in Step 1, the biodegradable resin, the papermaking waste, the starch, the inorganic minerals, and the adjuvant are mixed for 30min -500min.

Preferably, in Step 1, the biodegradable resin, the papermaking waste, the starch, the inorganic minerals, and the adjuvant are mixed for 60min -300min.

Preferably, in Step 1, the biodegradable resin, the papermaking waste, the starch, the inorganic minerals, and the adjuvant are heated up to a temperature between 20°C and 130°C.

Preferably, in Step 1, the biodegradable resin, the papermaking waste, the starch, the inorganic minerals, and the adjuvant are heated up to a temperature between 50°C and 80°C.

Preferably, in Step 1, the rotational speed is from 100rpm to 3000 rpm.

Preferably, in Step 1, the rotational speed is from 200rpm to 2000 rpm.

Preferably, in Step 2, the twin-screw extruder has six zones, wherein the 1^{st} zone to 6^{th} zone has a temperature in the range of 80°C to 240°C; the twin-screw extruder die has a temperature in the range of 80°C to 240 °C,and its rotational speed is from 30rpm to 600rpm.

Preferably, in Step 2, the twin-screw extruder has six zones, wherein the 1^{st} zone to 6^{th} zone has a temperature in the range of 100°C to 220°C.

Preferably, in Step 2, the twin-screw extruder has six zones, wherein the 1^{st} zone to 6^{th} zone has a temperature in the range of 110°C to 200°C.

Preferably, in Step 2, the twin-screw extruder die has a temperature in the range of 100°C to 220°C.

Preferably, in Step 2, the twin-screw extruder die has a temperature in the range of 110°C to 200°C.

Preferably, in Step 2, its rotational speed is from 60rpm to 450rpm.

Preferably, in Step 2, its rotational speed is from 120rpm to 300rpm.

Preferably, in Step 3, the following condition for blow molding should be met: the temperature is between 80°C and 240°C.

By adopting the above-mentioned technical solution, the present invention has the following technical effects when compared to the prior art:
the present invention provides a biodegradable product and a method for preparing the same. Such a method compounds the papermaking waste, starch, inorganic minerals and biodegradable resin. In this way, cost for producing the biodegradable product is greatly reduced; and the papermaking waste is recycled effectively, eliminating the impact on the environment.

### DETAILED DESCRIPTION

The present invention will now be described more fully hereinafter with reference to the accompanying drawings, in which exemplary embodiments of the invention are shown. This invention can, however, be embodied in many different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," or "includes" and/or "including" or "has" and/or "having" when used herein, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Hereinafter, certain exemplary embodiments according to the present disclosure will be described with reference to the accompanying drawings.

### Example 1

In an embodiment of the present invention, a biodegradable product comprises, by weight, the following raw materials in parts:
60 parts of poly (butyleneadipate-co-terephthalate) (PBAT), 10 parts of polylactic acid (PLA), 15 parts of papermaking waste, 12 parts of corn starch, 3 parts of calcium carbonate, 1 part of dicumyl peroxide (DCP), 6 parts of epoxidized soybean oil, and 1 part of calcium stearate.

In this embodiment, a method for preparing the biodegradable product is described as follows:
Step 1, papermaking waste is dried, crushed and sifted to obtain the papermaking waste having a particle size of 500 to 2000 mesh;
   60 parts of PBAT, 10 parts of polylactic acid (PLA), 15 parts of papermaking waste, 12 parts of corn starch, 3 parts of calcium carbonate, 1 part of dicumyl peroxide (DCP), 6 parts of epoxidized soybean oil, and 1 part of calcium stearate are added into a high-speed mixer proportionally and are mixed at a temperature of 100°C at a rotational speed of 500rpm for 100min, so as to obtain an initial mixed material;
Step 2, the initial mixed material is added into a twin-screw extruder for extrusion and granulation; the twin-screw extruder has six zones, wherein the 1^{st} zone to the 6^{th} zone each has a temperature of 180°C, 185°C, 190°C, 195°C, 195°C, 195°C, respectively; the twin-screw extruder die has a temperature of 190°C, and its rotational speed is 300rpm, so as to obtain a biodegradable product master batch;
Step 3, the biodegradable product master batch is conveyed to a film blowing machine and is shaped by blow molding, so as to obtain the biodegradable product.

Wherein, the biodegradable product can be a biodegradable film or a biodegradable bag.

### Example 2

In an embodiment of the present invention, a biodegradable product comprises, by weight, the following raw materials in parts:
60 parts of PBAT, 10 parts of polylactic acid (PLA), 15 parts of papermaking waste, 15 parts of corn starch, 1 part of dicumyl peroxide (DCP), 6 parts of epoxidized soybean oil, and 1 part of calcium stearate.

In this embodiment, a method for preparing the biodegradable product is described as follows:
Step 1, papermaking waste is dried, crushed and sifted to obtain the papermaking waste having a particle size of 50 to 5000 mesh; 60 parts of PBAT, 10 parts of polylactic acid (PLA), 15 parts of papermaking waste, 15 parts of corn starch, 1 part of dicumyl peroxide (DCP), 6 parts of epoxidized soybean oil, and 1 part of calcium stearate are added to a high-speed mixer proportionally and are mixed therein at a temperature of 120°C at a rotational speed of 600rpm for 300min, so as to obtain an initial mixed material;
Step 2, the initial mixed material is added to a twin-screw extruder for extrusion and granulation; the twin-screw extruder has six zones, wherein the 1^{st} zone to the 6^{th} zone each has a temperature of 130°C, 135°C, 140°C, 145°C, 145°C, 145°C, respectively; the twin-screw extruder die has a temperature of 150°C, and its rotational speed is 200rpm, so as to obtain a biodegradable product master batch;
Step 3, the biodegradable product master batch is conveyed to a film blowing machine and is shaped at a temperature of 140°C by blow molding , so as to obtain the biodegradable product.

Wherein, the biodegradable product can be a biodegradable film or a biodegradable bag.

### Example 3

In an embodiment of the present invention, a biodegradable product comprises, by weight, the following raw materials in parts:
60 parts of PBAT, 10 parts of polylactic acid (PLA), 27 parts of papermaking waste, 3 parts of talc, 1 part of dicumyl peroxide (DCP), 6 parts of glycerin, and 1 part of calcium stearate.

In this embodiment, a method for preparing the biodegradable product is described as follows:
Step 1, papermaking waste is dried, crushed and sifted to obtain the papermaking waste having a particle size of 50 to 5000 mesh;
   60 parts of PBAT, 10 parts of polylactic acid (PLA), 27 parts of papermaking waste, 3 parts of talc, 1 part of dicumyl peroxide (DCP), 6 parts of glycerin, and 1 part of calcium stearate are added to a high-speed mixer proportionally and are mixed therein at a temperature of 50°C at a rotational speed of 200rpm for 30min, so as to obtain an initial mixed material;
Step 2, the initial mixed material is added into a twin-screw extruder for extrusion and granulation; the twin-screw extruder has six zones, wherein the 1^{st} zone to the 6^{th} zone each has a temperature of 160°C, 165°C, 170°C, 175°C, 175°C, 175°C, respectively; the twin-screw extruder die has a temperature of 170°C, and its rotational speed is 150rpm, so as to obtain a biodegradable product master batch;
Step 3, the biodegradable product master batch is conveyed to a film blowing machine and is shaped at a temperature of 135°C by blow molding , so as to obtain the biodegradable product.

Wherein, the biodegradable product can be a biodegradable film or a biodegradable bag.

### Example 4

In an embodiment of the present invention, a biodegradable product comprises, by weight, the following raw materials in parts:
70 parts of PBAT, 15 parts of papermaking waste, 12 parts of cassava starch, 3 parts of calcium carbonate, 1 part of benzoyl peroxide (BPO), 6 parts of Tributyl Citrate (TBC), and 1 part of calcium stearate.

In this embodiment, a method for preparing the biodegradable product is described below:
Step 1, papermaking waste is dried, crushed and sifted to obtain the papermaking waste having a particle size of 200 to 300 mesh;
   70 parts of PBAT, 15 parts of papermaking waste, 12 parts of cassava starch, 3 parts of calcium carbonate, 1 part of benzoyl peroxide (BPO), 6 parts of Tributyl Citrate (TBC), and 1 part of calcium stearate added into a high-speed mixer proportionally and are mixed therein at a temperature of 30°C at a rotational speed of 150rpm for 1000min, so as to obtain an initial mixed material;
Step 2, the initial mixed material was added into a twin-screw extruder for extrusion and granulation; the twin-screw extruder has six zones, wherein the 1^{st} zone to the 6^{th} zone each has a temperature of 150°C, 155°C, 160°C, 165°C, 165°C, 165°C, respectively; the twin-screw extruder die has a temperature of 160°C, and its rotational speed is 250rpm, so as to obtain a biodegradable product master batch;
Step 3, the biodegradable product master batch is conveyed to a film blowing machine and is shaped at a temperature of 140°C by blow molding , so as to obtain the biodegradable product.

Wherein, the biodegradable product can be a biodegradable film or a biodegradable bag.

### Example 5

In an embodiment of the present invention, a biodegradable product comprises, by weight, the following raw materials in parts:
65 parts of PBAT, 5 parts of poly propylene carbonate (PPC), 20 parts of papermaking waste, 8 parts of corn starch, 2 parts of kaolin, 1 part of BPO, 8 parts of epoxidized soybean oil, and 1 part of calcium stearate.

In this embodiment, a method for preparing the biodegradable product is described as follows:
Step 1, papermaking waste is dried, crushed and sifted to obtain the papermaking waste having a particle size of 50 to 5000 mesh;
   65 parts of PBAT, 5 parts of PPC, 20 parts of papermaking waste, 8 parts of corn starch, 2 parts of kaolin, 1 part of BPO, 8 parts of epoxidized soybean oil, and 1 part of calcium stearate are added into a high-speed mixer proportionally and are mixed at a temperature of 40°C at a rotational speed of 400rpm for 300min, so as to obtain an initial mixed material;
Step 2, the initial mixed material is added to a twin-screw extruder for extrusion and granulation; the twin-screw extruder has six zones, wherein the 1^{st} zone to the 6^{th} zone each has a temperature of 140°C, 145°C, 150°C, 155°C, 155°C, 155°C, respectively; the twin-screw extruder die has a temperature of 150°C, and its rotational speed is 200rpm, so as to obtain a biodegradable product master batch;
Step 3, the biodegradable product master batch is conveyed to a film blowing machine and is shaped at a temperature of 145°C by blow molding , so as to obtain the biodegradable product.

Wherein, the biodegradable product can be a biodegradable film or a biodegradable bag.

### Example 6

In an embodiment of the present invention, a biodegradable product comprises, by weight, the following raw materials in parts:
55 parts of poly (butylene succinate) (PBS), 15 parts of PLA, 10 parts of papermaking waste, 18 parts of potato starch, 3 parts of diatomite, 1 part of DCP, 5 parts of glycerin, and 1 part of calcium stearate.

In this embodiment, a method for preparing the biodegradable product is described as follows:
Step 1, papermaking waste is dried, crushed and sifted to obtain the papermaking waste having a particle size of 500 to 2000 mesh;
   55 parts of poly (butylene succinate) (PBS), 15 parts of PLA, 10 parts of papermaking waste, 18 parts of potato starch, 3 parts of diatomite, 1 part of DCP, 5 parts of glycerin, and 1 part of calcium stearate are added into a high-speed mixer proportionally and are mixed therein at a temperature of 60°C at a rotational speed of 300rpm for 200min, so as to obtain an initial mixed material;
Step 2, the initial mixed material was added to a twin-screw extruder for extrusion and granulation; the twin-screw extruder has six zones, wherein the 1^{st} zone to the 6^{th} zone each has a temperature of 180°C, 185°C, 190°C, 195°C, 195°C, 195°C, respectively; the twin-screw extruder die has a temperature of 190°C, and its rotational speed is 300rpm, so as to obtain a biodegradable product master batch;
Step 3, the biodegradable product master batch is conveyed to a film blowing machine and is shaped at a temperature of 130°C by blow molding , so as to obtain the biodegradable product.

Wherein, the biodegradable product can be a biodegradable film or a biodegradable bag.

### Comparative Example 1

In this comparative example, a conventional biodegradable product is produced, which comprises, by weight, the following raw materials in parts:
70 parts of PBAT, 15 parts of PLA, 15 parts of corn starch, 1 part of DCP, 6 parts of epoxidized soybean oil, and 1 part of calcium stearate.

In this embodiment, a method for preparing the conventional biodegradable product is described as follows:
Step 1, 70 parts of PBAT, 15 parts of PLA, 15 parts of corn starch, 1 part of DCP, 6 parts of epoxidized soybean oil, and 1 part of calcium stearate are added to a high-speed mixer proportionally and are mixed at a temperature of 60°C at a rotational speed of 200rpm for 100min, so as to obtain an initial mixed material;
Step 2, the initial mixed material is added to a twin-screw extruder for extrusion and granulation; the twin-screw extruder has six zones, wherein the 1^{st} zone to the 6^{th} zone each has a temperature of 180°C, 185°C, 190°C, 195°C, 195°C, 195°C, respectively; the twin-screw extruder die has a temperature of 190°C, and its rotational speed is 200rpm, so as to obtain a conventional biodegradable product master batch;
Step 3, the conventional biodegradable product master batch is conveyed to a film blowing machine and is shaped at a temperature of 140°C by blow molding, so as to obtain the conventional biodegradable product.

Wherein, the conventional biodegradable product can be a conventional biodegradable film or a conventional biodegradable bag.

### Comparative Example 2

In this comparative example, a conventional biodegradable product is produced, which comprises, by weight, the following raw materials in parts:
65 parts of PBAT, 20 parts of PBS, 13 parts of cassava starch, 13 parts of calcium carbonate, 1 part of DCP, 6 parts of glycerin, and 1 part of calcium stearate.

In this embodiment, a method for preparing the conventional biodegradable product is described as follows:
Step 1, 65 parts of PBAT, 20 parts of PBS, 13 parts of cassava starch, 13 parts of calcium carbonate, 1 part of DCP, 6 parts of glycerin, and 1 part of calcium stearate are added into a high-speed mixer proportionally and are mixed at a temperature of 350°C at a rotational speed of 100rpm for 70min, so as to obtain an initial mixed material;
Step 2, the initial mixed material is added into a twin-screw extruder for extrusion and granulation; the twin-screw extruder has six zones, wherein the 1^{st} zone to the 6^{th} zone each has a temperature of 150°C, 155°C, 160°C, 165°C, 165°C, 165°C, respectively; the twin-screw extruder die has a temperature of 160°C, and its rotational speed is 130rpm, so as to obtain a conventional biodegradable product master batch;
Step 3, the conventional biodegradable product master batch is conveyed to a film blowing machine and is shaped at a temperature of 145°C by blow molding, so as to obtain the conventional biodegradable product.

Wherein, the conventional biodegradable product can be a conventional biodegradable film or a conventional biodegradable bag.

Examples 1 to 6 and comparative examples 1 and 2 are tested according to GB/T1040.2-2006 "Determination of Tensile Strength of Plastics," and respective performances are shown in the below table:

| | Tensile Strength (MPa) | Elongation at Break (%) |
|---|---|---|
| Example 1 | 22.3 | 255.6 |
| Example 2 | 23.5 | 244.2 |
| Example 3 | 21.9 | 271.3 |
| Example 4 | 22.6 | 261.5 |
| Example 5 | 23.1 | 234.3 |
| Example 6 | 22.7 | 253.1 |
| Comparative Example 1 | 21.4 | 258.7 |
| Comparative Example 2 | 20.3 | 243.1 |

it is known from the above table that mechanical properties of the biodegradable product are affected to a small extent after the papermaking waste is introduced into the biodegradable product, therefore, the biodegradable product can be suited to conventional applications.

The above descriptions are only the preferred embodiments of the invention, not thus limiting the embodiments and scope of the invention. Those skilled in the art should be able to realize that the schemes obtained from the content of specification and drawings of the invention are within the scope of the invention.

## Claims

1. A biodegradable product, comprising, by weight, the following compositions in parts:
40-90 parts of biodegradable resin,
5-50 parts of papermaking waste,
0-40 parts of starch,
0-5 parts of inorganic minerals, and
2-15 parts of adjuvant.

2. The biodegradable product of claim 1, wherein the biodegradable resin is selected from the group consisting of: poly (butylene succinate, polybutylene terephthalate/butylene adipate, polylactic acid (PLA), polyhydroxyalkanoate (PHA), polymethylethylene carbonate (PPC), and a mixture thereof.

3. The biodegradable product of claim 1, wherein the papermaking waste is selected from the group consisting of: slime, pulp, bark, pulping wastewater extract, silicon-containing white mud, and a mixture thereof, and the papermaking waste has a particle size of 50 to 5000 mesh.

4. The biodegradable product of claim 1, wherein the starch is selected from the group consisting of: cassava starch, corn starch, potato starch, cationic modified starch, anionic modified starch, and a mixture thereof.

5. The biodegradable product of claim 1, wherein the inorganic minerals is selected from the group consisting of: calcium carbonate, kaolin, talc, diatomite, and a mixture thereof.

6. The biodegradable product of claim 1, wherein the adjuvant comprises, by weight, the following compositions in parts:
0.5-2 parts of a crosslinker,
1-10 parts of a plasticizer, and
0.5-5 parts of a lubricant.

7. The biodegradable product of claim 6, wherein the crosslinker is selected from the group consisting of: dicumyl peroxide (DCP), benzoyl peroxide, 2,5-dimethyl-2,5 di-tert-butyl peroxyhexane, and a mixture thereof;
the plasticizer is selected from the group consisting of: butyl citrate, acetyl-tri-n-butyl citrate(ATBC), glycerin, epoxidized soybean oil, and a mixture thereof; and
the lubricant is calcium stearate.

8. A method for preparing a biodegradable product, comprising the steps of:
Step 1, adding biodegradable resin, papermaking waste, starch, inorganic minerals, and adjuvant into a high-speed mixer proportionally and mixing the same therein, so as to obtain an initial mixed material;
Step 2, adding the initial mixed material into a twin-screw extruder for extrusion and granulation, so as to obtain a biodegradable product master batch; and
Step 3, forming the biodegradable product master batch by blow molding, so as to obtain the biodegradable product.

9. The method for preparing a biodegradable product of claim 8, wherein in Step 1, the biodegradable resin, the papermaking waste, the starch, the inorganic minerals, and the adjuvant are added to the high-speed mixer proportionally and are mixed at 10rpm -5000rpm for 5min-1000min, and are heated up to a temperature of between 10°C and 150°C.

10. The method for preparing a biodegradable product of claim 8, wherein in Step 2, the following conditions for extruding and granulation should be met: the temperature is between 80°C and 240°C, and the rotational speed is between 30rpm and 600rpm.

11. The method for preparing a biodegradable product of claim 8, wherein in Step 3, the following condition for blow molding should be met: the temperature is between 80°C and 240°C.
